# EUROPÄISCHE PATENTANMELDUNG

(11) **EP 2 522 432 A1**
(43) Veröffentlichungstag der Anmeldung: **14.11.2012**
(21) Anmeldenummer: 12401076.0
(22) Anmeldetag: 04.05.2012
(51) Int. Cl.: B05B 1/16, B05B 1/20, A01M 7/00, B05B 15/00

(54) **Mehrfachdüsenkörper mit Beleuchtung**

(30) Priorität: 10.05.2011 DE 102011050233
(71) Anmelder: Amazonen-Werke H. Dreyer GmbH & Co. KG, 49205 Hasbergen (DE)
(72) Erfinder: Langkamp, Laurenz, 49545 Tecklenburg (DE)

(57) **Zusammenfassung**

Mehrfachdüsenkörper mit mehreren Ausbringdüsen (5) zur Anordnung an der Flüssigkeitsleitung (3) einer landwirtschaftlichen Feldspritze mit einem Gehäuse (1), an dem die Ausbringdüsen (5) angeordnet und in welchem Verstellelemente zum Aktivieren und Deaktivieren der Ausbringdüsen (5) angeordnet sind. Um eine vorteilhafte Anordnung von Lichtquellen (6) zur Beleuchtung von Sprühfächern (9), die von Ausbringdüsen von Mehrfachdüsenkörpern erzeugt werden, vorzuschlagen, ist vorgesehen, dass zumindest einigen der Ausbringdüsen (5) eine den von der Ausbringdüse ausgestoßenen Flüssigkeitsfächer (9) beleuchtende Lichtquelle (6) zugeordnet ist, wobei in dem Gehäuse (2) der Verstellelemente eine Aufnahmevorrichtung (8) für eine oder mehrere Lichtquellen (6) vorgesehen ist.

## Beschreibung

Die Erfindung betrifft einen Mehrfachdüsenkörper gemäß des Oberbegriffes des Patentanspruches 1.

Ein derartiger Mehrfachdüsenkörper ist beispielsweise durch die EP 1 661 627 B1 bekannt. Über Verstellelemente lassen sich dabei verschiedene Ausbringdüsen des Mehrfachdüsenkörpers aktivieren oder deaktivieren. Derartige Mehrfachdüsenkörper werden unter anderem an Feldspritzen verwendet.

Feldspritzen werden in der Landwirtschaft zum Ausbringen von Pflanzenschutzmitteln eingesetzt. Sie weisen ein sich quer zur Fahrtrichtung erstreckendes Verteilergestänge auf. Derartige Verteilergestänge erreichen derzeit Arbeitsbreiten bis zu 42m. An diesen Verteilergestängen sind beabstandet zueinander Verteilerdüsen angeordnet. Um wirtschaftlich arbeiten zu können, müssen mit der Feldspritze die Ausbringarbeiten auch bei Dunkelheit durchgeführt werden. Nur so ist genügend Ausbringzeit vorhanden. Dies ist darauf zurückzuführen, dass während des Tages, insbesondere bei Sonnenschein über die Mittagsstunden keine Pflanzenschutzmittel sinnvoll ausgebracht werden können, weil es dann zu Beschädigungen an den Blättern und den Pflanzen selber kommt. Die Flüssigkeitstropfen wirken dann wie optische Linsen, so dass es zu Verbrennungen an den Pflanzen kommt.

Für Feldspritzen mit Verteilerdüsen, die als Einzeldüsen ausgebildet sind, wurde dieses Problem gemäß EP 1 961 300 A3 bereits dadurch gelöst, dass zumindest einigen der Verteilerdüsen eine den von den Verteilerdüsen ausgestoßenen Flüssigkeitsfächer beleuchtende Lichtquelle zugeordnet ist. Der Erfindung liegt die Aufgabe zugrunde, eine vorteilhafte Anordnung von Lichtquellen zur Beleuchtung von Sprühfächern, die von Ausbringdüsen von Mehrfachdüsenkörpern erzeugt werden, vorzuschlagen.

Diese Aufgabe wird erfindungsgemäß durch das Kennzeichen des Patentanspruches 1 gelöst. Durch die Anordnung von Lichtquellen, wegen ihres vorteilhaft geringen Energieverbrauchs bevorzugt LEDs, wird der von den Düsen des Mehrfachdüsenkörpers ausgestoßene Flüssigkeitsfächer auch bei Dunkelheit sichtbar. Die Aufnahmevorrichtung der Lichtquellen befindet sich dabei im Gehäuse der motorischen Verstellelemente des Mehrfachdüsenkörpers. Diese Ausgestaltung der Aufnahmevorrichtung ist besonders vorteilhaft, da so die Voraussetzung geschaffen ist, in sehr einfacher Weise die Energieversorgung der Lichtquellen über die Energieversorgung der motorischen Verstellelemente umsetzbar zu machen. Dadurch müssen keine zusätzlichen Versorgungsleitungen gelegt werden.

Durch erfindungsgemäße Anordnung der Lichtquellen sind die ausgestoßenen Flüssigkeitsfächer auch bei Dunkelheit in einfacher und sicherer Weise für den Fahrer der Feldspritze sichtbar zu machen. Weiterhin können darüber hinaus in besonders einfacher Weise Lichtquellen an einzelnen Mehrfachdüsenkörpern eingesetzt und/oder ausgetauscht werden. Auch lassen sich die Lichtquellen bei sich bereits im Einsatz befindlichen Mehrfachdüsenkörpern nachrüsten, weil nur entsprechend ausgestaltete Gehäuse der Verstellelemente durch Austausch der bisherigen Gehäuse ersetzt werden.

Eine vorteilhafte Ausgestaltung der Energieversorgung lässt sich dadurch erreichen, dass in der Aufnahmevorrichtung Verbindungselemente angeordnet sind. Besonders vorteilhaft ist die Ausgestaltung der Verbindungselemente als passende Steckkontakte, so dass die Lichtquellen in einfacher Form in das Gehäuse der Verstellelemente des Mehrfachdüsenkörpers einsetzbar oder, beispielsweise zur Wartung oder zum Ersetzen, herausnehmbar sind.

In einer vorteilhaften Ausgestaltung der Erfindung ist ein Verschlusselement vorgesehen, das bei Nichtverwendung der Lichtquellen in der Aufnahmevorrichtung, in die Aufnahmevorrichtung einsetzbar ist. Die Lichtquellen sind dabei in einfacher Weise durch Verschlusselemente ersetzbar, wobei die Verschlusselemente in analoger Weise in das Gehäuse der Verstellelemente einsetzbar und wieder herausnehmbar sind. Ein Vorteil dieser Ausgestaltung ist die Verhinderung des Eindringens von Schmutz oder anderen Störkörpern in die Aufnahmevorrichtung bei Nichtverwendung der Lichtquellen in der Aufnahmevorrichtung. Vorteilhaft ist diese Ausgestaltung auch, da dieselben Mehrfachdüsenkörper ohne weitere Modifikation in Ausführungen mit und in Ausführungen ohne Lichtquellen für den Verkauf angeboten werden können. So kann später in einfacher und kostengünstiger Weise eine Nachrüstung vorgenommen werden.

In einer besonders vorteilhaften Ausführung der Erfindung sind jeder Düse des Mehrfachdüsenkörpers eine oder mehrere Lichtquellen zugeordnet. So kann eine besonders gute Ausleuchtung des von der jeweiligen Düse ausgestoßenen Flüssigkeitsfächers sichergestellt werden. Hier bei können die einzelnen Lichtquellen individuell auf einen Spritzfächer entsprechend optimiert ausgerichtet sein.

Weiterhin ist eine derartige Ausführung vorteilhaft, da auf diese Weise über geeignete Sensoranordnungen separat das von jedem einzelnen Sprühfächer reflektierte Licht in einfacherer Weise detektiert und dadurch die Sensoren beispielsweise als automatische funktionskontrollierende Elemente verwendbar sind.

Die einzelnen Düsen eines Mehrfachdüsenkörpers sind zu verschiedenen Zeiten in Betrieb nehmbar. Daher werden in einer vorteilhaften Ausführung der Erfindung die den einzelnen Düsen zugeordneten Lichtquellen mindestens annähernd zeitgleich zu den betreffenden Düsen in Betrieb genommen. Auf diese Weise werden sowohl Gebrauchserscheinungen als auch der Energiebedarf der Lichtquellen reduziert.

Weitere Einzelheiten der Erfindung sind der Beispielsbeschreibung und den Zeichnungen zu entnehmen. Hierbei zeigen
- Fig. 1: den Mehrfachdüsenkörper in perspektivischer Ansicht mit angedeutetem Spritzfächer aus einer Düse,
- Fig. 2: den Mehrfachdüsenkörper in perspektivischer Ansicht,

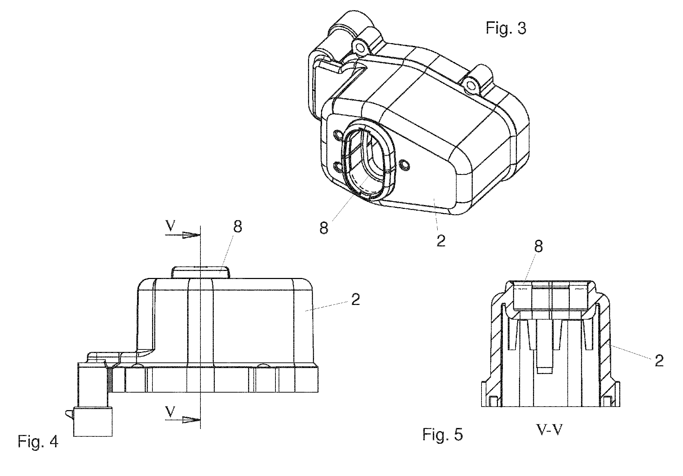

- Fig. 3: das Gehäuse der motorischen Verstellelemente in perspektivischer Ansicht,
- Fig. 4: das Gehäuse der motorischen Verstellelemente in seitlicher Ansicht,
- Fig. 5: das Gehäuse der motorischen Verstellelemente in der Ansicht V - V gemäß Fig. 4,

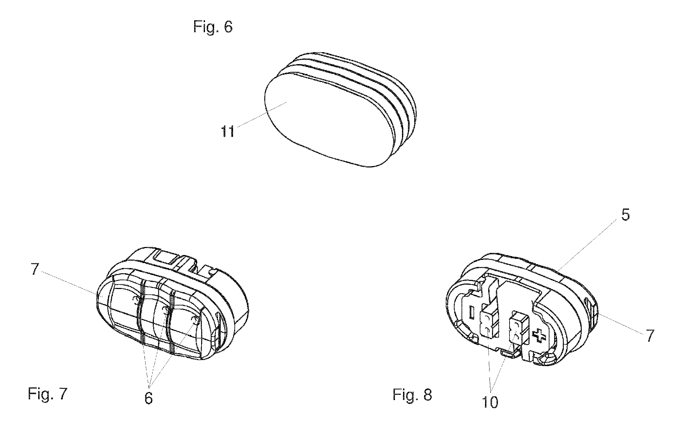

- Fig. 6: das Verschlusselement in vergrößerter Darstellung,
- Fig. 7: die als LEDs ausgebildeten Lichtquellen in Vorderansicht und in vergrößerter Darstellung,
- Fig. 8: die als LEDs ausgebildeten Lichtquellen in Rückansicht und in vergrößerter Darstellung,

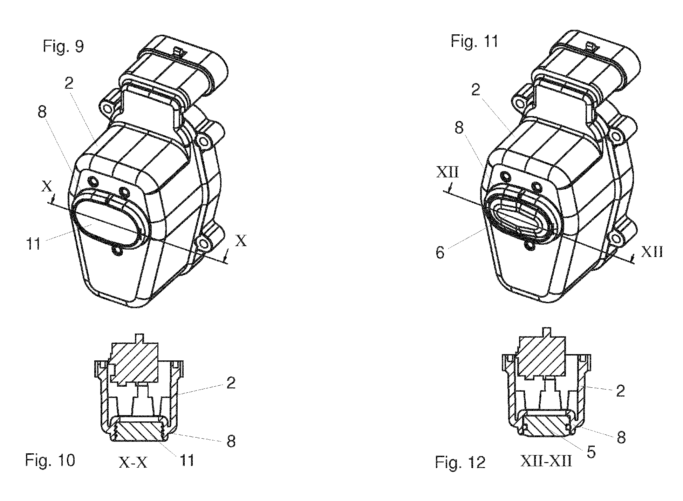

- Fig. 9: das Gehäuse der motorischen Verstellelemente in perspektivischer Ansicht mit Verschlusselement,
- Fig. 10: das Gehäuse der motorischen Verstellelemente in Ansicht X - X aus Fig. 9,
- Fig. 11: das Gehäuse der motorischen Verstellemente in perspektivischer Ansicht mit als LEDs ausgebildeten Lichtquellen und
- Fig. 12: das Gehäuse der motorischen Verstellelemente in Ansicht XII - XII aus Fig. 11.

Der Mehrfachdüsenkörper weist das Mehrfachdüsenkörpergehäuse 1 auf. Im unteren Bereich des Gehäuses befindet sich das Gehäuse 2 der motorischen Verstellelemente des Mehrfachdüsenkörpers. Im oberen Bereich des Mehrfachdüsenkörpergehäuses 1 ist ein Teil 3 der Flüssigkeitsleitung, an welcher der Mehrfachdüsenkörper anschließbar ist, angeordnet. Über diese Flüssigkeitsleitung, die beispielsweise an einem Verteilergestänge einer landwirtschaftlichen Feldspritze angeordnet ist, ist dem jeweiligen Mehrfachdüsenkörper die auszubringende Flüssigkeit zuzuführen.

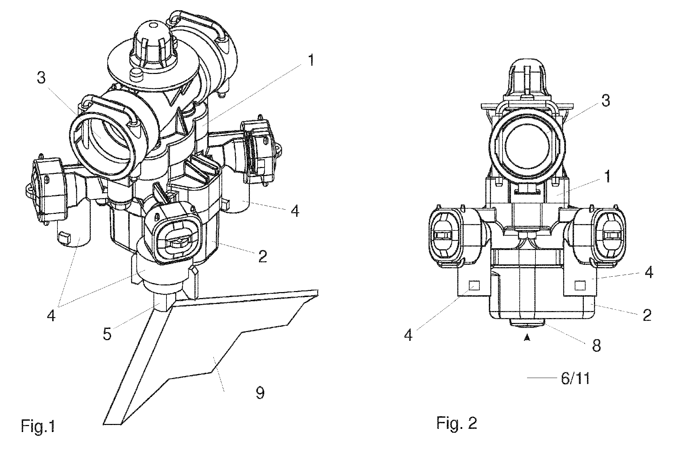

Die Flüssigkeitsleitung 3 ist mit der in dem Mehrfachdüsenkörpergehäuse 1 angeordneten, nicht dargestellten Zuleitung verbunden. Die Zuleitung mündet in einem in dem Mehrfachdüsenkörpergehäuse 1 angeordneten, nicht dargestellten Verteilerraum aus. Von diesem Verteilerraum führen, gemäß des Ausführungsbeispiels, vier nicht dargestellte Verbindungsleitungen zu den vier Anschlussstücken 4 der Ausbringdüsen 5, von denen eines in Fig. 1 nicht zu sehen ist und von denen zwei in Fig. 2 nicht zu sehen sind, die mittig in zumindest annähernd gleichmäßiger Weise um das Mehrfachdüsenkörpergehäuse 1 herum angeordnet sind.

Die Verbindungsleitungen sind im Bereich des Verteilerraumes mittels nicht dargestellter Absperrelemente abzusperren. Über diese Absperrelemente sind die Verbindungsleitungen mit der Zuleitung wahlweise verbindbar und/oder ihr gegenüber absperrbar. Die Absperrelemente sind über ein schaltbares, nicht dargestellte motorische Verstellelement, welches als Elektromotor ausgebildet ist, der sich im Gehäuse 2 der motorischen Verstellelemente befindet, betätigbar und somit in die jeweilige Absperr- oder Durchflussposition zu bringen.

Das als Elektromotor ausgebildete, motorische Verstellelement, welches in dem Gehäuse 2 angeordnet ist, ist über nicht dargestellte Verbindungsleitungen mit einer Stromversorgung und einer Steuerungseinrichtung, welche beispielsweise als Bordcomputer ausgebildet sein kann, verbunden.

Die als LEDs ausgebildeten Lichtquellen 6 sind zumindest annähernd mittig an der Unterseite des Gehäuses 2 der motorischen Verstellelemente in einem Lichtgehäuse 7 in der als Aussparung in dem Gehäuse 2 ausgebildeten Aufnahmevorrichtung 8 angeordnet. Von dort aus bilden sie Lichtkegel aus, die jeweils den Sprühfächer 9 der zugeordneten Düse 5 des Mehrfachdüsenkörpers beleuchten, derart, dass die zugeordneten Lichtquellen 6 in Betrieb genommen werden, wenn über die jeweilige Düse Mittel ausgebracht werden. Das heißt, eine zugeordnete Lichtquelle 6 wird dann zum Leuchten gebracht, wenn die betreffende Düse über die Verbindungsleitung mit der Zuleitung verbunden ist und über somit über die Düse Mittel ausgebracht werden.

An der Rückseite des Lichtgehäuses 7 der drei als LEDs ausgebildeten Lichtquellen 6 befinden sich als elektrische Steckkontakte 10 ausgebildete Verbindungselemente, mit denen die Energieversorgung der Lichtquellen 6 über die Energieversorgung der motorischen Verstellelemente erfolgt.

Anstatt der in einem Lichtgehäuse 7 befindlichen als LEDs ausgebildeten Lichtquellen 6, kann ein Verschlusselement 11 in die als Aussparung in dem Gehäuse 2 ausgebildeten Aufnahmevorrichtung 8 angeordnet werden. Dadurch lässt sich das Eindringen von insbesondere Schmutz und anderen Fremdkörpern in die Aufnahmevorrichtung 8 verhindern.

## Patentansprüche

1. Mehrfachdüsenkörper mit mehreren Ausbringdüsen (5) zur Anordnung an der Flüssigkeitsleitung (3) einer landwirtschaftlichen Feldspritze mit einem Gehäuse (1), an dem die Ausbringdüsen angeordnet und in welchem Verstellelemente zum Aktivieren und Deaktivieren der Ausbringdüsen (5) angeordnet sind, **dadurch gekennzeichnet, dass** zumindest einigen der Ausbringdüsen (5) eine den von der Ausbringdüse (5) ausgestoßenen Flüssigkeitsfächer (9) beleuchtende Lichtquelle (6) zugeordnet ist, wobei in dem Gehäuse (2) der Verstellelemente eine Aufnahmevorrichtung (8) für eine oder mehrere Lichtquellen (6) vorgesehen ist.

2. Mehrfachdüsenkörper nach Anspruch 1, **dadurch gekennzeichnet, dass** in der Aufnahmevorrichtung (8) elektrische Verbindungselemente zur Energieversorgung der Lichtquellen (6) angeordnet sind.

3. Mehrfachdüsenkörper nach Anspruch 2, **dadurch gekennzeichnet, dass** bei Nichtverwendung von Lichtquellen (6) in der Aufnahmevorrichtung (8) ein Verschlusselement (11) in die Aufnahmevorrichtung (8) einsetzbar ist.

4. Mehrfachdüsenkörper nach Anspruch 2, **dadurch gekennzeichnet, dass** die Energieversorgung der Lichtquellen (6) mit der Versorgungsleitung der Verstellelemente verbindbar ist.

5. Mehrfachdüsenkörper nach Anspruch 1, **dadurch gekennzeichnet, dass** jeder Düse (5) des Mehrfachdüsenkörpers eine oder mehrere Lichtquellen (6) zugeordnet sind.

6. Mehrfachdüsenkörper nach Anspruch 5, **dadurch gekennzeichnet, dass** die zugeordneten Lichtquellen (6) in Betrieb nehmbar sind, wenn über die Düse (5) Mittel ausgebracht werden.
